# EUROPÄISCHE PATENTSCHRIFT

(11) **EP 1 974 810 B1**
(45) Veröffentlichungstag und Bekanntmachung des Hinweises auf die Patenterteilung: **18.08.2010**
(21) Anmeldenummer: 07005548.8
(22) Anmeldetag: 19.03.2007
(51) Int. Cl.: B01J 23/44, B01J 23/46, B01D 53/94, B01J 37/02, B01J 35/00

(54) **Palladium-Rhodium Einfachschicht Katalysator**
Palladium-rhodium single layer catalytic converter
Catalyseur monocouche de palladium-rhodium

(43) Veröffentlichungstag der Anmeldung: 01.10.2008
(73) Patentinhaber: Umicore AG & Co. KG, 63457 Hanau-Wolfgang (DE)
(72) Erfinder: Klingmann, Raoul, Dr., 63755 Alzenau (DE); Rösch, Martin, Dr., 63110 Rodgau (DE); Lindner, Dieter, Dr., 63457 Hanau (DE); Richter, Jörg-Michael, 60389 Frankfurt am Main (DE)

(56) Entgegenhaltungen:
- EP-A- 0 875 290
- US-A- 5 212 142
- US-A- 5 597 771
- US-A- 6 080 375
- US-A1- 2003 180 197

## Beschreibung

Die Erfindung betrifft einen Dreiweg-Katalysator mit hervorragender katalytischer Aktivität und Alterungsstabilität für die Reinigung der Abgase von Verbrennungsmotoren.

Dreiweg-Katalysatoren werden in großen Stückzahlen für die Reinigung der Abgase von im wesentlichen stöchiometrisch betriebenen Verbrennungsmotoren eingesetzt. Sie sind in der Lage, die drei wesentlichen Schadstoffe des Motors, nämlich Kohlenwasserstoffe, Kohlenmonoxid und Stickoxide, gleichzeitig zu unschädlichen Komponenten umzusetzen. Häufig kommen dabei doppelschichtige Katalysatoren zum Einsatz, die eine Trennung verschiedener katalytischer Vorgänge und damit eine optimale Abstimmung der katalytischen Wirkungen in den beiden Schichten ermöglichen. Katalysatoren dieser Art werden zum Beispiel in EP 0 885 650 und EP 1 046 423 beschrieben.

Doppelschichtige Katalysatoren haben den Nachteil, daß ihre Herstellung teurer ist als die von einschichtigen Katalysatoren. Weiterhin neigen doppelschichtige Katalysatoren gegenüber einschichtigen Katalysatoren zu einem erhöhten Abgasgegendruck, was zu Lasten der Leistung der Verbrennungsmotoren und ihres Kraftstoffverbrauchs geht. Daher gab es auch schon immer Bestrebungen, die guten katalytischen Eigenschaften von Doppelschichtkatalysatoren möglichst ohne Abstriche durch Einfachschichtkatalysatoren zu erzeugen. Einschichtige Dreiweg-Katalysatoren sind zum Beispiel aus WO 98/09726, EP1 138 382 und EP 1 541 220 bekannt.

Die ständig steigenden Anforderungen an die Emissionsminderung von Verbrennungsmotoren machen eine stetige Weiterentwicklung der Katalysatoren bezüglich der katalytischen Aktivität, Alterungsbeständigkeit und Herstellungskosten notwendig. Es war daher die Aufgabe dieser Erfindung, einen Katalysator zur Verfügung zu stellen, der gegenüber den Katalysatoren aus dem Stand der Technik weiter verringerte Anspringtemperaturen und eine verbesserte Temperaturstabilität bei geringeren Herstellkosten aufweist.

Diese Aufgabe wird durch einen Katalysator gemäß den Ansprüchen gelöst. Der Katalysator weist eine einzige katalytisch aktive Beschichtung auf einem inerten Katalysatorträger aus Keramik oder Metall auf. Der Katalysator ist dadurch gekennzeichnet, daß er ein aktives Aluminiumoxid und ein erstes und ein zweites Cer/Zirkon-Mischoxid enthält, wobei das erste Cer/Zirkon-Mischoxid mit Rhodium aktiviert ist und einen höheren Zirkonoxidgehalt aufweist als das zweite Cer/Zirkon-Mischoxid, welches mit Palladium katalytisch aktiviert ist.

Im Rahmen der vorliegenden Erfindung bedeutet die Formulierung, ein Trägermaterial sei mit einem katalytisch aktiven Element aktiviert, daß das katalytisch aktive Element in hochdisperser Form auf der durch Imprägnieren zugänglichen Oberfläche des Trägermaterials abgeschieden ist.

Durch die Kombination der genannten Eigenschaften zeigt der Katalysator ein sehr gutes Anspringverhalten und besitzt eine hohe Temperaturstabilität. Außerdem weist der Katalysator einen geringen Abgasgegendruck auf und seine Herstellkosten sind geringer als die eines entsprechenden Doppelschicht-Katalysators.

Das aktive Aluminiumoxid und die Cer/Zirkon-Mischoxide werden als pulverförmige Feststoffe in die Beschichtung eingebracht. Beide Mischoxide können zur Verbesserung Ihrer Temperaturstabilität mit wenigstens einem Oxid der Elemente ausgewählt aus der Gruppe bestehend aus Eisen, Mangan, Zinn, Titan, Silizium, Yttrium, Lanthan, Praseodym, Neodym, Samarium und Mischungen davon stabilisiert sein. Die Menge der Dotierungselemente, berechnet als Oxid, liegt bevorzugt zwischen 1 und 15, insbesondere zwischen 5 und 10 Gew.-%, bezogen auf das Gesamtgewicht des stabilisierten Mischoxids.

Das erste Cer/Zirkon-Mischoxid weist bevorzugt ein Gewichtsverhältnis von Ceroxid zu Zirkonoxid von 0,5 bis 0,1 und das zweite Cer/Zirkon-Mischoxid ein Gewichtsverhältnis von Ceroxid zu Zirkonoxid von 0,8 bis 1,2 auf. Die spezifische Oberfläche dieser Materialien liegt vorteilhafterweise in einem Bereich zwischen 50 und 100 m²/g.

Das aktive Aluminiumoxid kann mit 1 bis 10 Gew.-% Lanthanoxid stabilisiert sein, bezogen auf das Gesamtgewicht von Aluminiumoxid plus Lanthanoxid. Eine weitere Verbesserung der Temperaturstabilität des Katalysators läßt sich erreichen, wenn aktives Aluminiumoxid und die Cer/Zirkon-Mischoxide zusätzlich mit Strontiumoxid und/oder Bariumoxid imprägniert sind.

Gewöhnlich handelt es sich bei dem Katalysatorträger um einen Wabenkörper mit einem Volumen V, der parallele Strömungskanäle für die Abgase des Verbrennungsmotors aufweist, wobei die Wandflächen der Strömungskanäle mit dem Katalysator beschichtet sind und die Konzentration des Palladiums bezogen auf das Volumen des Wabenkörpers zwischen 0,1 und 10 g und die Konzentration des Rhodiums zwischen 0,01 und 1 g liegt. In einer besonderen Ausführungsform des Katalysators kann das erste Cer/Zirkon-Mischoxid zusätzlich zu Rhodium noch mit Palladium katalytisch aktiviert sein. In einer weiteren Ausführungsform können beide Cer/Zirkon-Mischoxide noch mit Platin aktiviert sein.

Die tatsächlich anzuwendenden Edelmetallkonzentrationen hängen von den gewünschten Schadstoffumsätzen ab. Die höchsten hier angegebenen Konzentrationswerte sind für die Einhaltung der strengen Abgasnormen für SULEV-Fahrzeuge erforderlich (SULEV = Super Ultra-Low Emission Vehicles).

Zur Beschichtung des Katalysatorträgers mit der katalytisch aktiven Schicht muß eine Beschichtungssuspension hergestellt werden, die alle Bestandteile der gewünschten katalytischen Schicht entweder direkt oder Vorstufen davon enthält, die durch die abschließende Kalzinierung der Beschichtung in ihre endgültige Form überführt werden.

Die beiden Cer/Zirkon-Mischoxide können separat mit Vorläuferverbindungen von Rhodium oder Palladium durch bekannte Imprägnierverfahren belegt werden. Bevorzugt werden die wasserlöslichen Verbindungen Rhodiumnitrat und Palladiumnitrat verwendet. Die so vorbelegten Materialien können dann gemeinsam mit Aluminiumoxid in Wasser suspendiert werden. Die Suspension wird naß vermahlen bis die Feststoffe der Suspension eine mittlere Korngröße von etwa 3 bis 5 µm aufweisen. Danach werden die Wabenkörper mit dieser Suspension nach bekannten Verfahren beschichtet, getrocknet und kalziniert. Dieses Herstellverfahren garantiert, daß Palladium und Rhodium voneinander getrennt auf unterschiedlichen Trägermaterialien abgeschieden sind.

In einer bevorzugten Ausführungsform der Erfindung wird zunächst das erste Cer/Zirkon-Mischoxid in Wasser suspendiert. Zu dieser Suspension wird eine Lösung einer Vorläuferverbindung von Rhodium, bevorzugt Rhodiumnitrat, gegeben. Danach wird der pH-Wert der Suspension mit einer Base, zum Beispiel Tetraethylammoniumhydroxid (TEAH), auf einen Wert von etwa 6 angehoben, um das Rhodiumnitrat auszufällen. Anschließend wird das zweite Cer/Zirkon-Mischoxid in der Suspension suspendiert und eine Lösung einer Vorläuferverbindung von Palladium zugefügt. Dadurch sinkt der pH-Wert der Suspension in den stark sauren Bereich. Durch erneute Zugabe einer Base wird der pH-Wert wieder auf etwa 6 angehoben und damit das Palladium auf beide Mischoxide ausgefällt. Danach wird Aluminiumoxid zur Suspension gegeben und die Suspension abschließend, wie schon beschrieben, vermahlen und auf denn Katalysator-Tragkörper aufgebracht. Der so hergestellte Katalysator enthält keine Erdalkalimetalle.

Alternativ kann zunächst eine basische Lösung von Bariumhydroxid und/oder Strontiumoxid vorgelegt werden. In diese Lösung wird das erste Cer/Zirkon-Mischoxid gegeben und in der Lösung suspendiert. Danach wird der Suspension zum Beispiel eine Lösung von Rhodiumnitrat zugefügt, wobei das Rhodium wegen der Basizität der Suspension auf das erste Cer/Zirkon-Mischoxid ausfällt. Danach wird der Suspension das zweite Cer/Zirkon-Mischoxid zugeführt, gefolgt von einer Palladiumnitrat-Lösung. Abschließend wird Aluminiumoxid zur Suspension gegeben und die Suspension wie schon beschrieben vermahlen und auf den Katalysator-Tragkörper aufgebracht. Durch Verwenden von Bariumhydroxid oder Strontiumhydroxid als Base für die Fällung von Rhodiumnitrat verbleiben Bariumoxid oder Strontiumoxid nach der abschließenden Kalzinierung in der Beschichtung.

In den gemäß den letzten beiden Herstellvarianten gefertigten Katalysatoren befindet sich auf den Partikeln des ersten Cer/Zirkon-Mischoxids sowohl Rhodium als auch Palladium.

Im folgenden wird die Erfindung an Hand der Beispiele und den Figuren näher erläutert. Es zeigen:
- **Figur 1**:: Vergleich der Anspringtemperaturen eines Katalysators aus dem Stand der Technik mit Katalysatoren gemäß verschiedener Ausführungsformen
- **Figur 2**:: Maximal-Umsätze der Katalysatoren von Figur 1

### Vergleichsbeispiel

Es wurde ein Katalysator gemäß der EP 1 541 220 angefertigt. Hierzu wurde zunächst eine Suspension aus Bariumsulfat in Wasser angefertigt. Zu dieser Suspension wurde 1 Gew.-% Salpetersäure gegeben und der pH-Wert damit auf etwa 5 abgesenkt. Danach wurde ein mit 3 Gew.-% Lanthanoxid stabilisiertes γ-Aluminiumoxid gefolgt von einem Cer/Zirkon-Mischoxid mit einem Zirkonoxid-Gehalt von 50 Gew.-% zugegeben und der pH-Wert während der Zugabe durch Salpetersäure etwa konstant gehalten. Nach der Zugabe von 10 Gew.-% Saccharose wurde die Suspension vermahlen und dann Palladiumnitrat und Rhodiumnitrat zugefügt. Nach einer Reifezeit von einer Stunde wurde ein Cordierit-Wabenkörper mit der Suspension beschichtet, getrocknet und kalziniert. Der Wabenkörper hatte eine Zelldichte von 93 cm⁻², einen Durchmesser von 14,4 cm und eine Länge von 10,2 cm. Der fertige Katalysator enthielt die folgenden Beschichtungsmengen:

| | |
|---|---|
| 80 g/l | mit Lanthan stabilisiertes Aluminiumoxid |
| 75 g/l | Cer/Zirkon-Mischoxid (70 Gew.-% Zirkonoxid) |
| 0,18 g/l | Rhodium (auf allen Feststoffkomponenten) |
| 0,88 g/l | Palladium (auf allen Feststoffkomponenten) |

### Beispiel 1

Es wurde ein erfindungsgemäßer Katalysator wie folgt hergestellt:
Ein zirkonreiches Cer/Zirkon-Mischoxid (70 Gew.-% Zirkonoxid) wurde in Wasser suspendiert und anschließend Rhodiumnitrat in die Suspension gerührt. Mit TEAH wurde der pH-Wert der Suspension wieder auf einen Wert von etwa 6 angehoben. Danach wurde ein Cer/Zirkonoxid mit 50 Gew.-% Zirkonoxid in die Suspension gegeben und Palladiumnitrat in die Suspension eingerührt. Der pH-Wert wurde erneut mit TEAH auf 6 angehoben, bevor der Suspension ein mit 3 Gew.-% Lanthanoxid stabilisiertes γ-Aluminiumoxid zugefügt wurde. Abschließend wurde die Suspension vermahlen und ein Wabenkörper wie im Vergleichsbeispiel damit beschichtet, getrocknet und kalziniert. Der fertige Katalysator enthielt die folgenden Beschichtungsmengen:

| | |
|---|---|
| 80 g/l | mit Lanthan stabilisiertes Aluminiumoxid |
| 35 g/l | erstes Cer/Zirkon-Mischoxid (70 Gew.-% Zirkonoxid) |
| 40 g/l | zweites Cer/Zirkon-Mischoxid (50 Gew.-% Zirkonoxid) |
| 0,18 g/l | Rhodium (auf erstem Cer/Zirkon-Mischoxid) |
| 0,88 g/l | Palladium (auf erstem und zweitem Cer/Zirkon-Mischoxid) |

### Beispiel 2

Es wurde ein weiterer, erfindungsgemäßer Katalysator wie folgt hergestellt:
Bariumhydroxid wurde in Wasser gelöst. In dieser Lösung wurde das Cer/Zirkon-Mischoxid mit 70 Gew.-% Zirkonoxid suspendiert und Rhodiumnitrat in die Suspension gegeben. Danach wurde das Cer/Zirkonoxid mit 50 Gew.-% Zirkonoxid in der Suspension dispergiert und Palladiumnitrat in die Suspension eingerührt. Nach dem Hinzufügen von Aluminiumoxid wurde der pH-Wert mit Essigsäure auf den Wert 6 eingestellt. Abschließend wurde die Suspension vermahlen und ein Wabenkörper wie im. Vergleichsbeispiel damit beschichtet, getrocknet und kalziniert. Der fertige Katalysator enthielt die folgenden Beschichtungsmengen:

| | |
|---|---|
| 80 g/l | mit Lanthan stabilisiertes Aluminiumoxid |
| 2 g/l | Bariumoxid |
| 35 g/l | erstes Cer/Zirkon-Mischoxid (70 Gew.-% Zirkonoxid) |
| 40 g/l | zweites Cer/Zirkon-Mischoxid (50 Gew.-% Zirkonoxid) |
| 0,18 g/l | Rhodium (auf erstem Cer/Zirkon-Mischoxid) |
| 0,88 g/l | Palladium (auf erstem und zweitem Cer/Zirkon-Mischoxid) |

### Prüfung der Katalysatoren

Vor der Prüfung wurden alle Katalysatoren einer hydrothermalen Alterung in einem Ofen für die Dauer von 16 Stunden bei einer Temperatur von 985 °C ausgesetzt.

Nach der Alterung wurden die Katalysatoren an einem Motorprüfstand bezüglich Anspringtemperaturen und Maximalumsätzen untersucht.

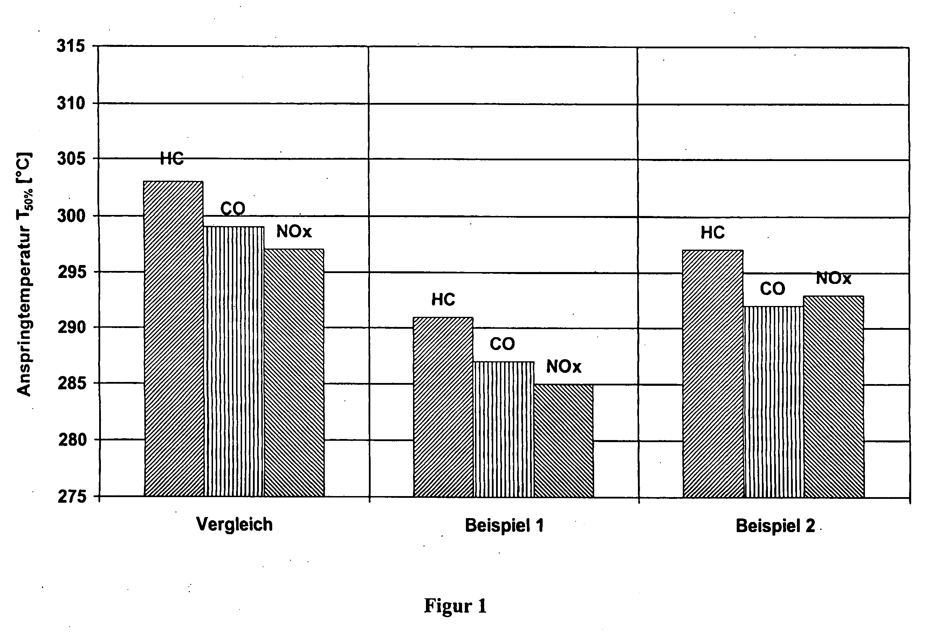

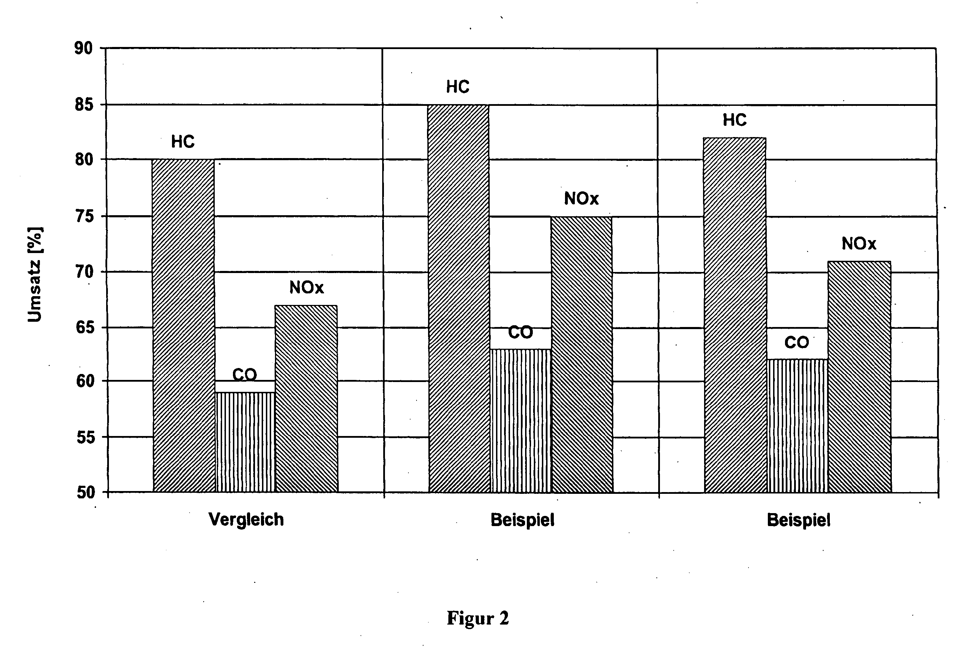

Figur 1 zeigt den Vergleich der Anspringtemperaturen. Die beiden erfindungsgemäßen Katalysatoren weisen nach Alterung deutlich niedrigere Anspringtemperaturen für den Umsatz der Schadstoffe HC (Kohlenwasserstoffe), CO (Kohlenmonoxid) und NOx (Stickoxide) als der Vergleichskatalysator auf. Das Diagramm von Figur 2 zeigt die mit den Katalysatoren erreichten Maximalumsätze.

Die Katalysatoren wiesen bei einer Gastemperatur von 30 °C und einem Luft-Massenstrom von 345 kg/h einen Gegendruck von 18,3 mbar auf. Dieser Gegendruck liegt etwa 15 % unter dem Gegendruck eines vergleichbaren Doppelschichtkatalysators.

## Patentansprüche

1. Dreiweg-Katalysator bestehend aus einer einzigen katalytisch aktiven Beschichtung auf einem inerten Katalysatorträger aus Keramik oder Metall für die Reinigung der Abgase von Verbrennungsmotoren,
**dadurch gekennzeichnet,**
**daß** der Katalysator ein aktives Aluminiumoxid und ein erstes und ein zweites Cer/Zirkon-Mischoxid enthält, wobei das erste Cer/Zirkon-Mischoxid mit Rhodium aktiviert ist und einen höheren Zirkonoxidgehalt aufweist als das zweite Cer/Zirkon-Mischoxid, welches mit Palladium katalytisch aktiviert ist.

2. Dreiweg-Katalysator nach Anspruch 1,
**dadurch gekennzeichnet,**
**daß** Aluminiumoxid und die Cer/Zirkon-Mischoxide zusätzlich mit Strontiumoxid oder Bariumoxid auf ihrer Oberfläche beschichtet sind.

3. Dreiweg-Katalysator nach Anspruch 1,
**dadurch gekennzeichnet,**
**daß** die Cer/Zirkon-Mischoxide jeweils mit 1 bis 15 Gew.% Seltenerdoxiden, bezogen auf das Gesamtgewicht der Mischoxide, stabilisiert sind, wobei die Seltenerdoxide jeweils ausgewählt sind aus der Gruppe bestehend aus Eisen, Mangan, Zinn, Titan, Silizium, Yttrium, Lanthan, Praseodym, Neodym, Samarium und Mischungen davon.

4. Dreiweg-Katalysator nach Anspruch 3,
**dadurch gekennzeichnet,**
**daß** das erste Cer/Zirkon-Mischoxid ein Gewichtsverhältnis von Ceroxid zu Zirkonoxid von 0,5 bis 0,1 und das zweite Cer/Zirkon-Mischoxid ein Gewichtsverhältnis von Ceroxid zu Zirkonoxid von 0,8 bis 1,2 aufweist.

5. Dreiweg-Katalysator nach Anspruch 4,
**dadurch gekennzeichnet,**
**daß** das aktive Aluminiumoxid jeweils mit 1 bis 10 Gew.-% Lanthanoxid, bezogen auf das Gesamtgewicht des Aluminiumoxids stabilisiert ist.

6. Dreiweg-Katalysator nach Anspruch 1,
**dadurch gekennzeichnet,**
**daß** es sich bei dem Katalysatorträger um einen Wabenkörper mit einem Volumen V handelt, der parallele Strömungskanäle für die Abgase des Verbrennungsmotors aufweist, wobei die Wandflächen der Strömungskanäle mit dem Dreiweg-Katalysator beschichtet sind und die Konzentration des Palladiums bezogen auf das Volumen des Wabenkörpers zwischen 0,1 und 10 g und die Konzentration des Rhodiums zwischen 0,01 und 1 g liegt.

7. Dreiweg-Katalysator nach Anspruch 6,
**dadurch gekennzeichnet,**
**daß** das erste Cer/Zirkon-Mischoxid zusätzlich zu Rhodium noch mit Palladium katalytisch aktiviert ist.

8. Dreiweg-Katalysator nach Anspruch 7,
**dadurch gekennzeichnet,**
**daß** das erste und zweite Cer/Zirkon-Mischoxid zusätzlich zu Palladium noch mit Platin katalytisch aktiviert sind.

9. Verwendung des Dreiweg-Katalysators nach einem der vorstehenden Ansprüche als motornaher Start-Katalysator oder als Haupt-Katalysator im Unterbodenbereich eines mit einem Benzinmotor ausgerüsteten Kraftfahrzeugs zur Reinigung der Abgase des Motors.

## Claims

1. Three-way catalyst consisting of a single catalytically active coating on an inert catalyst support of ceramic or metal for the cleaning of the exhaust gases of internal combustion engines,
**characterized in that**
the catalyst comprises an active aluminium oxide and a first and a second cerium/zirconium mixed oxide, the first cerium/zirconium mixed oxide being activated with rhodium and having a higher zirconium oxide content than the second cerium/zirconium mixed oxide which is catalytically activated with palladium.

2. Three-way catalyst according to Claim 1,
**characterized in that**
aluminium oxide and the cerium/zirconium mixed oxides are additionally surface coated with strontium oxide or barium oxide.

3. Three-way catalyst according to Claim 1,
**characterized in that**
the cerium/zirconium mixed oxides are each stabilized with 1 to 15% by weight of rare earth oxides, based on the total weight of the mixed oxides, the rare earth oxides in each case being selected from the group consisting of iron, manganese, tin, titanium, silicon, yttrium, lanthanum, praseodymium, neodymium, samarium and mixtures thereof.

4. Three-way catalyst according to Claim 3,
**characterized in that**
the first cerium/zirconium mixed oxide has a weight ratio of cerium oxide to zirconium oxide of 0.5 to 0.1 and the second cerium/zirconium mixed oxide has a weight ratio of cerium oxide to zirconium oxide of 0.8 to 1.2.

5. Three-way catalyst according to Claim 4,
**characterized in that**
the active aluminium oxide is in each case stabilized with 1 to 10% by weight of lanthanum oxide, based on the total weight of the aluminium oxide.

6. Three-way catalyst according to Claim 1,
**characterized in that**
the catalyst support is a honeycomb with a volume V, which has parallel flow channels for the exhaust gases of the internal combustion engine, the wall surfaces of the flow channels being coated with the three-way catalyst and the concentration of the palladium based on the volume of the honeycomb being between 0.1 and 10 g, and the concentration of the rhodium between 0.01 and 1 g.

7. Three-way catalyst according to Claim 6,
**characterized in that**
the first cerium/zirconium mixed oxide is also catalytically activated with palladium in addition to rhodium.

8. Three-way catalyst according to Claim 7,
**characterized in that**
the first and second cerium/zirconium mixed oxides are also catalytically activated with platinum in addition to palladium.

9. Use of the three-way catalyst according to one of the preceding claims as a starter catalyst close-coupled to the engine or as a main catalyst in the underbody region of a motor vehicle equipped with a gasoline engine for cleaning the exhaust gases of the engine.

## Revendications

1. Catalyseur à trois voies constitué par un seul revêtement catalytiquement actif sur un support de catalyseur inerte en céramique ou en métal pour l'épuration des gaz d'échappement de moteurs à combustion, **caractérisé en ce que** le catalyseur contient un oxyde d'aluminium actif et un premier et un deuxième oxyde mixte de cérium/zirconium, où le premier oxyde mixte de cérium/zirconium est activé avec du rhodium et présente une teneur en oxyde de zirconium plus élevée que le deuxième oxyde mixte de cérium/zirconium, qui est activé catalytiquement avec du palladium.

2. Catalyseur à trois voies selon la revendication 1, **caractérisé en ce que** l'oxyde d'aluminium et les oxydes mixtes de cérium/zirconium sont en outre revêtus avec de l'oxyde de strontium ou de l'oxyde de baryum sur leur surface.

3. Catalyseur à trois voies selon la revendication 1, **caractérisé en ce que** les oxydes mixtes de cérium/zirconium sont à chaque fois stabilisés avec 1 à 15 % en poids d'oxydes de terres rares, par rapport au poids total des oxydes mixtes, les oxydes de terres rares étant à chaque fois choisis dans le groupe constitué par le fer, le manganèse, l'étain, le titane, le silicium, l'yttrium, le lanthane, le praséodyme, le néodyme, le samarium et leurs mélanges.

4. Catalyseur à trois voies selon la revendication 3, **caractérisé en ce que** le premier oxyde mixte de cérium/zirconium présente un rapport pondéral d'oxyde de cérium à oxyde de zirconium de 0,5 à 0,1 et le deuxième oxyde mixte de cérium/zirconium présente un rapport pondéral d'oxyde de cérium à oxyde de zirconium de 0,8 à 1,2.

5. Catalyseur à trois voies selon la revendication 4, **caractérisé en ce que** l'oxyde d'aluminium actif est à chaque fois stabilisé avec 1 à 10% en poids d'oxyde de lanthane, par rapport au poids total de l'oxyde d'aluminium.

6. Catalyseur à trois voies selon la revendication 1, **caractérisé en ce qu'**il s'agit, pour le support de catalyseur, d'un corps en nid d'abeille d'un volume V, qui présente des canaux d'écoulement parallèles pour les gaz d'échappement du moteur de combustion, les surfaces des parois des canaux d'écoulement étant revêtues par le catalyseur à trois voies et la concentration en palladium, par rapport au volume du corps en nid d'abeille étant située entre 0,1 et 10 g et la concentration en rhodium étant située entre 0,01 et 1 g.

7. Catalyseur à trois voies selon la revendication 6, **caractérisé en ce que** le premier oxyde mixte de cérium/zirconium est activé catalytiquement, en plus du rhodium, par du palladium.

8. Catalyseur à trois voies selon la revendication 7, **caractérisé en ce que** le premier et le deuxième oxyde mixte de cérium/zirconium sont activés catalytiquement, en plus du palladium, par du platine.

9. Utilisation du catalyseur à trois voies selon l'une quelconque des revendications précédentes, comme catalyseur de démarrage proche du moteur ou comme catalyseur principal dans la zone du dessous de caisse d'un véhicule motorisé équipé d'un moteur à essence pour l'épuration des gaz d'échappement du moteur.
